# FASCICULE DE BREVET EUROPEEN

(11) **EP 2 014 026 B1**
(45) Date de publication et mention de la délivrance du brevet: **27.07.2011**
(21) Numéro de dépôt: 07731957.2
(22) Date de dépôt: 27.04.2007
(51) Int. Cl.: H04L 12/46

(54) **PROCEDE DE TRANSMISSION D'UNE PLURALITE DE CHAMPS IDENTIFICATEURS DANS UN RESEAU A COMMUTATION DE PAQUETS**
VERFAHREN ZUM SENDEN VON MEHREREN KENNUNGSFELDERN IN EINEM PAKETVERMITTLUNGSNETZWERK
METHOD FOR TRANSMITTING A PLURALITY OF IDENTIFIER FIELDS IN A PACKET SWITCH NETWORK

(30) Priorité: 28.04.2006 FR 0651536
(43) Date de publication de la demande: 14.01.2009
(73) Titulaire: FRANCE TELECOM, 75015 Paris (FR)
(72) Inventeur: ADAM, Yann, F-22220 Treguier (FR); CLAVIER, Rémi, F-22560 Pleumeur Bodou (FR)
(74) Mandataire: Benetiere, Marion
(86) Numéro de dépôt international: PCT/FR2007/051184
(87) Numéro de publication internationale: WO 2007/125259

(56) Documents cités:
- WO-A-02/29991
- WO-A1-03/001748
- WO-A2-2005/032063
- US-A1- 2006 007 925

## Description

### 1. Domaine de l'invention

Le domaine de l'invention est celui des télécommunications, et plus particulièrement des réseaux de transport par commutation de paquets.

### 2. Art antérieur

La technologie Ethernet basée sur la commutation de paquets est de plus en plus utilisée par les opérateurs de télécommunications. Elle intervient au niveau de la couche transport du modèle OSI, "acronyme anglais de "Open Systems Interconnection", et remplace la transmission en mode synchrone réalisée, par exemple, par l'intermédiaire du protocole SDH, acronyme anglais de "Synchronous Digital Hierarchy".

Elle est par exemple mise en oeuvre par un opérateur pour la collecte de flux résidentiels dans un réseau de collecte. Un tel réseau comprend une pluralité de points d'accès, qui sont notamment en charge de collecter les différents types de flux qui proviennent des abonnés. Lorsque la liaison est une paire de fils de cuivre téléphonique, le point d'accès est un multiplexeur numérique de lignes de clients, connu sous le terme de DSLAM. DSLAM est l'acronyme de "Digital Subscriber Line Access Multiplexor".

La technologie VLAN Ethernet permet à un opérateur de définir, sur la base d'un réseau de télécommunications physique, plusieurs réseaux virtuels, afin de différencier les services qu'il met en place pour ses clients. Un réseau virtuel ou VLAN Ethernet, acronyme anglais de Virtual Local Area Network, met en relation les terminaux impliqués dans la mise en oeuvre d'un service particulier.

Pour faciliter le traitement des différents types de flux qui traversent le point d'accès, l'opérateur met en place des réseaux virtuels qui concernent, par exemple :
- un service lié à la voix sur IP, IP étant l'acronyme anglais de "Internet Protocol";
- un service de chaînes de télévision sur IP;
- un service de VOD, acronyme anglais de "Video On Demand";
- un service d'accès à Internet;
- un service offrant un premier bouquet de chaînes de télévision par satellite;
- un service offrant un deuxième bouquet de télévision par satellite;
- le trafic de gestion du réseau de collecte proprement dit.

Un premier avantage des VLANs Ethernet est que les équipements mis en relation par un premier VLAN Ethernet ne sont pas directement accessibles au niveau Ethernet depuis un équipement appartenant à un deuxième VLAN Ethernet. On parle d'étanchéité entre les réseaux virtuels. Cette étanchéité facilite le traitement des flux de données.

Un second avantage des réseaux virtuels réside dans le fait qu'ils permettent une configuration dynamique du réseau de transport physique afin de s'adapter aux besoins variables des clients au cours du temps. Par exemple, le service de chaînes de télévision sur IP peut nécessiter une allocation dynamique de bande passante un jour précis de 20H45 à 23H00 à l'occasion de la retransmission de la finale de la coupe du monde de football. Dans ce cas, un VLAN Ethernet supplémentaire pourra être mis en place pendant cette période par l'opérateur pour allouer la bande passante supplémentaire. Une banque peut aussi demander à bénéficier d'une allocation dynamique de bande passante chaque nuit pour acheminer des données entre son siège et ses succursales.

Un VLAN Ethernet est identifié dans le réseau, sur la base d'informations de niveau Ethernet, plus précisément par un champ identificateur. La norme IEEE 802.1Q définit un champ identificateur VLAN-ID pour représenter le numéro d'un VLAN Ethernet de type Ethernet. Ce champ est codé sur 12 bits et permet donc 4096 valeurs de numéros de VLANs Ethernet. La norme IEEE 802.1ah définit quant à elle un champ identificateur I-TAG codé sur 20 bits.

Lorsqu'il est décidé, par exemple au niveau d'un système de gestion d'un réseau de transmission ou NMS, acronyme anglais de "Network Management System", de créer un nouveau service ou d'établir de nouvelles connexions au sein du réseau, une requête est émise par le NMS, via un réseau de gestion, à destination d'entités du réseau, appelées entités client. Cette requête spécifie le VLAN Ethernet impliqué à l'aide de son champ identificateur. Les entités clients du réseau de transport qui reçoivent la requête émise par le NMS sont, par exemple, des routeurs qui répercutent ensuite la requête à des entités serveur du réseau de transport, tels que des points d'accès, de façon à établir la connexion demandée de bout en bout. La demande de brevet US2006/007925 décrit un procédé de transmission d'un flux de paquets de données MPLS entre un premier noeud et un deuxième noeud d'un réseau de communications où l'information contenue dans une séquence de labels MPLS contenue dans une partie de l'en-tête du paquet de données est compressée en exploitant cette similitude entre les paquets de données. La demande de brevet internationale WO02/29991 concerne un procédé d'encapsulation d'un groupe de paquets de données adressées à une même destination dans un seul paquet de données. Cette encapsulation est rendue possible par la compression d'informations contenues dans les paquets du groupe de paquets, en particulier des informations de l'en-tête ou les informations utiles.

### 3. Inconvénients de l'art antérieur

Aujourd'hui, un opérateur utilise de plus en plus souvent la technologie Ethernet et en particulier les VLANs pour configurer dynamiquement son réseau de transport.

La quantité d'informations relatives aux champs identificateurs de VLAN à véhiculer entre le NMS et les entités clients du réseau de transport est en constante augmentation. La création d'un nouveau service peut en effet nécessiter la spécification de plusieurs centaines de VLANs. On peut citer, par exemple, la mise en place d'une interconnexion de réseaux métropolitains basés sur la technologie Ethernet par un réseau de transport ou une agrégation de services réseaux dans une couche inférieure, par exemple une agrégation de réseaux virtuels VLANs Ethernet dans une couche de transport SDH.

Or, les protocoles actuels de gestion des VLANs ne permettent de spécifier qu'un seul numéro de VLAN par requête. Par conséquent la création d'un nouveau service peut nécessiter l'envoi séquentiel de plusieurs centaines de requêtes.

Si le réseau de gestion par lequel transite la requête de nouveau service ou de nouvelle connexion dispose d'une bande passante importante et n'impose donc que peu de contraintes en termes de débit, ce n'est pas le cas du réseau de transport pour lequel la charge occasionnée en termes de débit est de plus en plus importante.

### 4. Objectifs de l'invention

L'invention a notamment pour objectif de pallier ces inconvénients de l'art antérieur.

Plus précisément, il existe un besoin d'une technique fournissant une solution pour transmettre une séquence de champs identificateurs de réseaux virtuels entre deux entités du réseau de transport, de façon plus efficace en termes de débit.

### 5. Exposé de l'invention

L'invention répond à ce besoin à l'aide d'un procédé de transmission d'une séquence de N champs identificateurs d'un réseau virtuel d'une entité client vers au moins une entité serveur d'un réseau de transport par commutation de paquets.

Le procédé est tel que revendiqué à la revendication 1.

Ainsi, l'invention propose une solution tout à fait nouvelle et inventive pour transmettre une séquence de champs identificateurs de VLANs Ethernet dans un réseau de transport. En effet, le procédé selon l'invention applique non seulement un algorithme de compression de données ou codeur à la séquence formée par la pluralité de champs identificateurs de réseaux virtuels de façon à obtenir une séquence codée de longueur réduite représentative de ladite séquence, mais il choisit, parmi une liste de codeurs disponibles celui qui est adapté pour fournir la séquence codée la plus courte.

Cette séquence codée, du fait de sa longueur réduite, peut ensuite être écrite dans un seul paquet de commande.

L'invention permet ainsi de résoudre le problème technique de la transmission plus efficace d'une pluralité de champs identificateurs de VLANs Ethernet dans un réseau de transport.

Dans un premier mode de réalisation de l'invention, l'étape de choix du codeur consiste à tester la pluralité de codeurs et à choisir celui qui fournit effectivement la séquence codée la plus courte. Il s'agit d'une solution exhaustive qui donne l'assurance de mettre en oeuvre l'algorithme de codage le mieux adapté à la séquence de champs identificateurs en présence.

Dans un second mode de réalisation de l'invention, l'étape de choix du codeur comprend les sous-étapes:
- d'extraction d'une pluralité de caractéristiques de la séquence de champs identificateurs; et
- d'application desdites règles préétablies à ces caractéristiques aboutissant au choix d'un codeur.

De telles règles déterminent le codeur à utiliser en fonction de caractéristiques intrinsèques de la séquence à coder, par exemple des caractéristiques liées à une statistique de la séquence à coder. Un avantage est qu'il n'est pas nécessaire de tester la pluralité de codeurs à chaque fois qu'une séquence de champs identificateurs doit être envoyée. Les ressources au niveau de l'entité client en charge de mettre en oeuvre le procédé selon l'invention sont donc épargnées.

Selon une caractéristique avantageuse de l'invention, les règles préétablies sont établies à partir d'un ensemble d'apprentissage comprenant une pluralité de séquences. Un tel apprentissage, qui demande des ressources importantes de calcul, se fait dans une étape préalable et permet d'établir des règles très simples qui seront facilement mises en oeuvre lors de la transmission d'une séquence réelle.

Selon une autre caractéristique avantageuse du deuxième mode de réalisation de l'invention, le procédé comprend une étape de comparaison de la longueur de la séquence codée par le codeur choisi à la longueur de la séquence S, de telle sorte que, si la longueur de la séquence codée est supérieure à la longueur de la séquence S, une étape supplémentaire de codage de la séquence S est mise en oeuvre à l'aide d'un codeur de référence apte à fournir une séquence codée de référence de longueur inférieure à longueur de la séquence S. Un avantage est que l'on est ainsi assuré d'obtenir et ensuite de transmettre une séquence codée de longueur inférieure à une longueur maximale donnée.

L'invention concerne aussi une entité client apte à transmettre, sur un réseau de transport, à au moins une entité serveur, une pluralité de champs identificateurs d'un réseau virtuel.

L'entité client est telle que revendiquée à la revendication 8.

L'invention concerne également une entité serveur d'un réseau de transport apte à recevoir un paquet de commande comprenant une séquence codée représentative d'une séquence comprenant une pluralité de champs identificateurs de réseaux virtuels. L'entité serveur est telle que revendiquée à la revendication 9.

L'invention concerne également un produit programme d'ordinateur téléchargeable depuis un réseau de communication et/ou stocké sur un support lisible par ordinateur et/ou exécutable par un microprocesseur

Selon l'invention, un tel produit programme d'ordinateur comprend des instructions de code de programme pour l'exécution du procédé de transmission lorsqu'il est exécuté sur un ordinateur.

### 6. Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels:
- la figure 1 représente un exemple réseau de transport mettant en oeuvre le procédé selon l'invention;
- la figure 2 représente, à titre purement illustratif, un organigramme des étapes essentielles de mise en oeuvre du procédé objet de la présente invention;
- la figure 3a représente, à titre purement illustratif, un organigramme des étapes essentielles de mise en oeuvre du procédé selon un premier mode de réalisation de l'invention;
- la figure 3b représente, à titre purement illustratif, un organigramme des étapes essentielles de mise en oeuvre du procédé selon un deuxième mode de réalisation de l'invention;
- la figure 4a représente, à titre purement illustratif, une entité client objet de la présente invention;
- la la figure 4b représente, à titre purement illustratif, une entité serveur objet de la présente invention;

### 7. Description d'un mode de réalisation particulier de l'invention

Le principe général de l'invention repose sur la sélection auto adaptative d'un codeur chargé de compresser une séquence formée par une pluralité de champs identificateurs de VLANs Ethernet en vue de sa transmission dans un seul paquet de commande sur le réseau de transport.

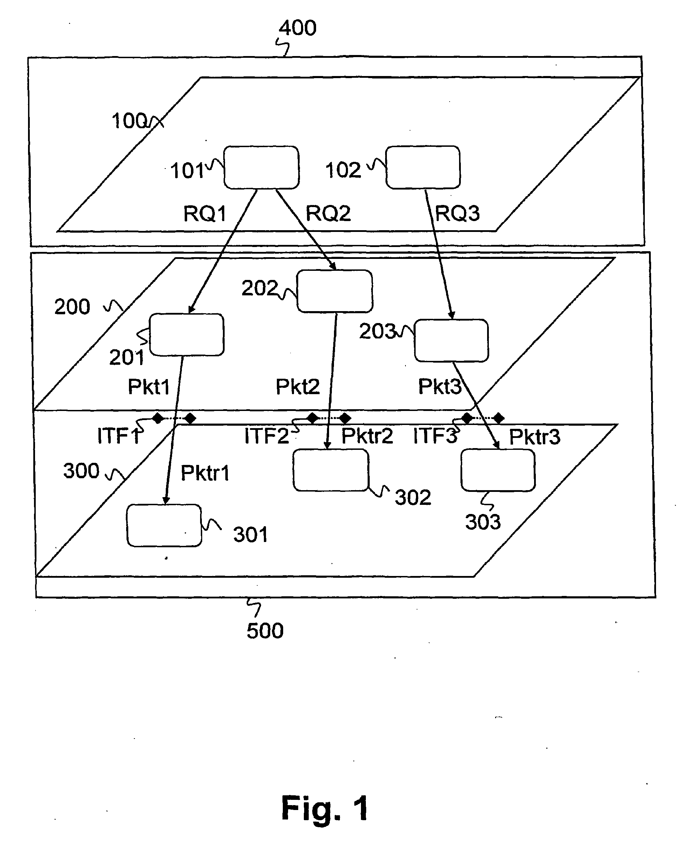

On présente tout d'abord, en relation avec la Fig. 1, un exemple d'application du procédé de transmission d'une pluralité de champs identificateurs de VLANs Ethernet selon l'invention. On a représenté un réseau de transport 500 selon un plan de gestion 100, comprenant une première entité de gestion 101 et une deuxième entité de gestion 102, un plan de commande 200 comprenant une première entité client 201, une deuxième entité client 202 et une troisième entité client 203, et un plan de transmission 300 comprenant une première entité serveur 301, une deuxième entité serveur 302 et une troisième entité serveur 303. Les entités clients 201, 202, 203 communiquent avec les entités serveur 301, 302, 303 par l'intermédiaire, respectivement, d'une première interface ITF1, d'une deuxième interface ITF2 et d'une troisième interface ITF3 entre le plan de commande 200 et le plan de transmission 300. L'entité client 201, 202, 203 a reçu des entités de gestion 101, 102 du plan de gestion 100 au moins une requête RQ1, RQ2, RQ3 de connexion à une pluralité de nouveaux services.

On indique qu'une telle requête RQ1, RQ2, RQ3 peut concerner aussi bien un seul champ identificateur que la pluralité de champs identificateurs de VLANs Ethernet.

En réponse à cette requête RQ1, RQ2, RQ3, l'entité client 201, 202, 203 communique avec l'entité serveur 300 à 302 via l'interface ITF1, ITF2, ITF3 du plan de commande 200 afin d'établir, dans le réseau de transport 500, au niveau du plan de transmission 300, les connexions exigées par mise en place de la pluralité des nouveaux services demandés.

De façon avantageuse, la requête RQ1, RQ2, RQ3 comporte des informations de niveau Ethernet et peut être transmise de l'entité client 201, 202, 203 du plan de commande à l'entité serveur 301, 302, 303 du plan de transmission 300 sous la forme d'un message émis sur l'interface ITF1, ITF2, ITF3. De façon avantageuse, l'interface ITF1, ITF2, ITF3 est de type UNI, acronyme anglais de "User to Network Interface". Dans ce cas, les champs identificateurs de VLANs Ethernet correspondant aux services demandés sont généralement inclus dans un objet dont la structure peut varier suivant le protocole utilisé pour transmettre le message. Dans le cas des protocoles RSVP, acronyme anglais de "Resource Reservation Protocol", ou LDP, acronyme anglais de "Label Distribution Protocol", il s'agit par exemple d'un TLV, acronyme anglais de Type Length Value.

Dans cet exemple d'application, on considère un champ identificateur de VLAN Ethernet V_{N} tel que défini dans la norme IEEE 802.1Q. Un tel champ identificateur de VLAN Ethernet est un numéro dont les valeurs possibles sont comprises entre 0 et 2^{N}-1. Selon une telle norme, N est un entier égal à 12. Le nombre de valeurs que peut prendre le champ identificateur de VLAN V_{N} est 2^{N}= 2¹²= 4096 valeurs possibles.

Il faut noter cependant que la présente invention ne se limite pas à une telle norme, mais qu'elle concerne également tout autre symbole identificateur d'un VLAN Ethernet, par exemple le champ I-TAG défini par la norme IEEE 802.1ah ou encore tout label défini par un protocole de communication tel que MPLS, acronyme anglais de "Multiprotocol Label Switching", ou GMPLS, acronyme anglais de "Generalized Multiprotocol Label Switching", en cours de normalisation à l'IETF, acronyme anglais de "International Engineering Task Force".

On considère maintenant une pluralité de champs identificateurs, comprenant k champs identificateurs, k étant un entier supérieur ou égal à 1. Cette pluralité de champs identificateurs a été reçue par l'entité client 201, 202, 203 par l'intermédiaire du réseau de gestion 400 sous forme d'au moins une requête RQ1, RQ2, RQ3. Selon l'invention, elle est ensuite concaténée en une séquence S, laquelle est transformée en une séquence codée Ci(S) qui peut ensuite être encapsulée dans un message émis sur l'interface ITF sous la forme d'un seul paquet de commande Pkt1, Pkt2, Pkt3.

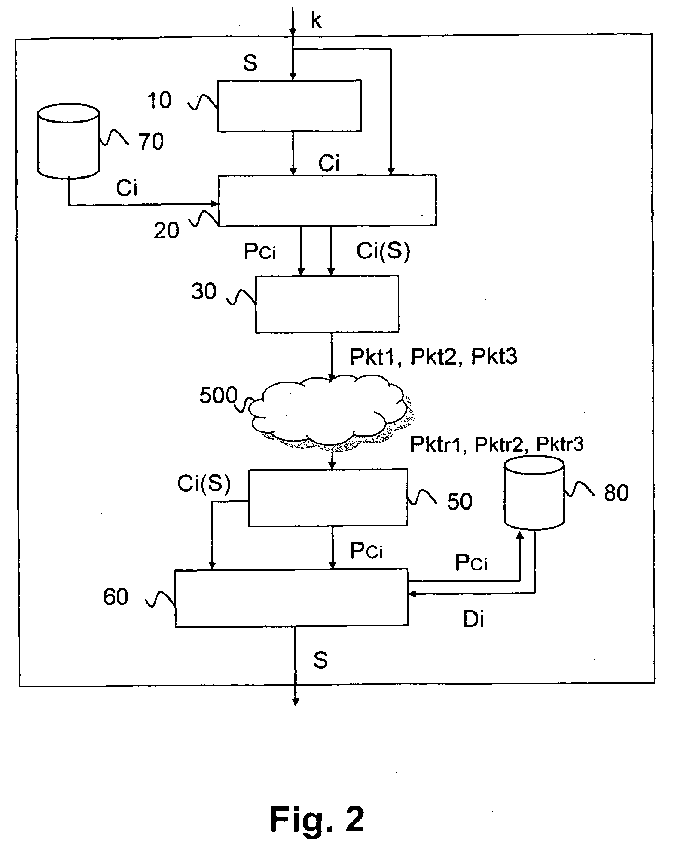

On présente maintenant, en relation avec la Fig. 2, les étapes essentielles de mise en oeuvre du procédé selon l'invention.
Un tel procédé comprend, au niveau de l'entité client 201, 202, 203:
- une étape 10 de choix d'un codeur Ci parmi une pluralité de codeurs C1 à CM, M étant un entier supérieur ou égal à 2. La pluralité de codeurs C1 à CM est par exemple stockée dans une mémoire 70 sous forme d'une pluralité de modules logiciels L1 à LM.
   De façon avantageuse, le codeur est choisi de telle sorte que la séquence codée obtenue satisfait un critère de plus courte longueur,
- une étape 20 de codage de la séquence S à l'aide du codeur Ci choisi et destinée à fournir une séquence codée Ci(S) représentative de la séquence S. Au codeur Ci sont associés des paramètres de codage PCi. De tels paramètres comprennent au moins un identifiant ID-Ci du codeur Ci choisi. Ils peuvent comporter en outre des paramètres d'initialisation du codeur P-ini,
- une étape 30 de transmission de la séquence codée Ci(S) et des paramètres de codage PCi associés dans un paquet de commande Pkt1 à Pkt3. Le paquet de commande Pkt1 à Pkt3 émis par l'entité client 201, 202, 203 est transmis via l'interface ITF1, ITF2, ITF3 à l'entité serveur 301, 302, 303 correspondante.

Selon l'invention, le procédé comprend, au niveau des entités serveurs 301, 302, 303:
- une étape 50 de détection et de lecture des paramètres de codage PCi dans le paquet de commande reçu Pktr1, Pktr2, Pktr3, destinée à identifier au moins le codeur utilisé Ci,
- une étape 60 de décodage de la séquence codée reçue à l'aide d'un décodeur Di correspondant au codeur identifié. La pluralité de décodeurs D1 à DM correspondant aux codeurs C1 à CM est par exemple stockée dans une mémoire 80 sous forme d'une pluralité de modules logiciels L'1 à L'M.

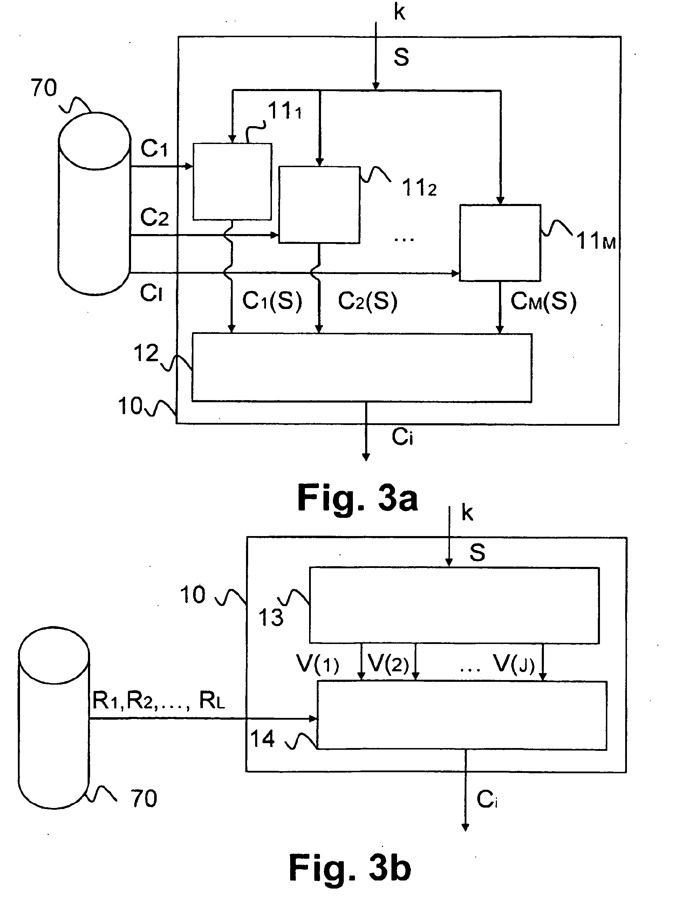

On considère, en relation avec la Fig. 3a, un premier mode de réalisation de l'invention, selon lequel l'étape 10 comprend :
- une pluralité d'étapes 11₁ à 11ₖ de mise en oeuvre de la pluralité de codeurs C₁ à C_{M}, destinées à fournir une pluralité de séquences codées C₁(S) à C_{M}(S),
- une étape 12 de choix de la séquence codée C,(S) la plus courte parmi la pluralité de séquences codées C₁(S) à C_{M}(S).

C'est une méthode exhaustive, qui présente l'avantage de déterminer à coup sûr le codeur le plus efficace pour une séquence de champs identificateurs de VLANs donnée. On entend par codeur le plus efficace celui qui satisfait le critère de plus courte longueur de la séquence codée.

On indique que, selon l'invention, la pluralité de codeurs C₁ à C_{M} mise en oeuvre par le procédé selon l'invention s'appuie sur des techniques de codage bien connues de l'homme de métier, parmi lesquelles on trouve, par exemple:
- CI: le codeur identité, qui reproduit en sortie la séquence d'entrée à l'identique,
- LI: le codeur liste, selon lequel le nombre de numéros de VLANs Ethernet présents dans la séquence est représenté par un premier mot de N bits, les mots de N bits suivants représentant, sous forme de liste, les numéros des champs identificateurs de VLANs Ethernet à coder,
- MX: le codeur mixte, selon lequel un premier mot de N bits représente un nombre a de numéros de VLANs Ethernet isolés dans la séquence d'entrée et un deuxième mot de N bits représente un nombre b de groupes de numéros de champs identificateurs de VLANs Ethernet, les a mots de N bits suivants contiennent les numéros de champs identificateurs de VLANs Ethernet isolés et les b paires de mots de N bits suivantes contiennent les numéros de début et de fin de groupe.
   BI: une séquence binaire de 2^{N} bits dans laquelle un bit à 1 au rang i représente la présence du champ identificateur de VLAN Ethernet numéro i dans la séquence d'entrée S
   H2: codeur de Huffman auto adaptatif basé sur un alphabet de 4 symboles, soit une longueur de symboles de 2 bits, appliqué à la séquence fournie par BI,
- H4: codeur de Huffman auto adaptatif basé sur un alphabet de 32 symboles, soit une longueur de symbole de 4 bits, appliqué à la séquence fournie par BI, H8: codeur de Huffman auto adaptatif basé sur un alphabet de 256 symboles, soit une longueur de symbole de 8 bits, appliqué à la séquence fournie par BI". RLE: codage RLE avec une longueur de symbole égale à 1, appliqué à la séquence fournie par BI.

On considère ensuite, en relation avec la Fig. 3b, un deuxième mode de réalisation de l'invention selon lequel l'étape 10 comprend:
- une étape 13 d'extraction d'une pluralité de caractéristiques V(1) à V(J) de la séquence de champs identificateurs, J étant un entier supérieur ou égal à 1; et
- un étape 14 d'application de règles préétablies R1 à RL à ces caractéristiques, L étant un entier supérieur ou égal à 1.

On indique que la liste des codeurs utilisés est la même que dans le premier mode de réalisation.

Il s'agit d'une méthode heuristique, que l'on décrit maintenant de façon détaillée dans un exemple d'application. Une séquence de numéros de champs identificateurs de VLANs Ethernet possède en effet des caractéristiques intrinsèques qui peuvent être avantageusement exploitées lors de son codage. De telles caractéristiques intrinsèques concernent par exemple une répartition des k numéros de champs identificateurs de VLANs Ethernet constituant la séquence parmi les 2^{N} valeurs possibles. L'étape 13 selon l'invention peut, alors avantageusement extraire un vecteur de caractéristiques V comprenant J composantes. Dans cet exemple, on considère les J=5 caractéristiques suivantes:
- Le nombre total de champs identificateurs de VLANs Ethernet V(1) dans la séquence S,
- un nombre total V(2) de groupes de champs identificateurs de VLANs Ethernet dans la séquence S, un groupe de numéros de champs identificateurs de VLANs Ethernet comprenant au moins deux numéros consécutifs,
- un nombre V(3) de champs identificateurs de VLANs Ethernet isolés, un numéro de VLAN Ethernet étant isolé si les numéros de champs identificateurs de VLANs Ethernet voisins ne sont pas présents dans la séquence S,
- un nombre V(4) de groupes de champs identificateurs de VLANs Ethernet de taille supérieure à 3 dans la séquence S,
- un nombre V(5) de groupes de champs identificateurs de VLANs Ethernet de taille supérieure à 10 dans la séquence S.

L'efficacité des codeurs définis précédemment dépend des caractéristiques intrinsèques de la séquence S à coder. Par exemple, le codeur identité CI est très efficace pour représenter une séquence comprenant quelques numéros de champs identificateurs de VLANs Ethernet isolés. Le codeur mixte MX est efficace pour représenter une séquence comprenant quelques numéros de champs identificateurs de VLANs Ethernet isolés et quelques plages de champs identificateurs de VLANs Ethernet. Le codeur liste LI est efficace pour représenter un grand nombre de champs identificateurs de VLANs Ethernet. Les codeurs H2, H4, H8 et RLE permettent de compresser la séquence fournie par le codeur BI.

Selon le deuxième mode de réalisation de l'invention, l'étape 14 met en oeuvre des règles R1 à RL pour décider quel est le codeur le plus adapté en fonction d'une valeur du vecteur V. De façon avantageuse de l'invention, de telles règles sont établies à partir d'un ensemble de test comprenant une pluralité de séquences décrites par des vecteurs V et le meilleur codeur associé. Des techniques diverses, bien connues de l'homme de métier, peuvent être utilisées. Parmi elles, on peut citer celle des réseaux neuronaux. Un réseau neuronal est capable, dans une phase d'apprentissage de construire des connexions, qu'il mettra ensuite en application pour des vecteurs réels. Un tel apprentissage, qui demande des ressources importantes de calcul, se fait une fois pour toutes dans une étape préalable.

Une alternative à la technique neuronale est de déduire des règles heuristiques très simples d'un grand nombre de simulations réalistes.

A titre d'exemple, on présente ci-dessous un ensemble de règles obtenues à partir de simulations réalisées sur des séquences de numéros de VLANS comprenant 9 bits:

### • VLANS individuels:

- R1: V(1)=25: Ci = H4
- R2: V(1) = 50: Ci = H4,
- R3: V(1) > 100: Ci= H4,

### a Petits groupes de VLANs (10<V(2)>20)

- R4: V(1) = 25: Ci=H4,
- R5: V(1) = 50: Ci=H4,
- R6: V(1) = 100: Ci=RLE,
- R7: V(1) > 100: Ci=RLE

### • Grands groupes de VLANs (50<V(2)>100)

- R8: Ci=RLE1,

### • Mixte

- R9: 10 isolés + 10 petits groupes : Ci = H4,
- R10: 50 isolés + 10 petits groupes : Ci = H4,
- R11: 100 isolés + 10 petits groupes : Ci = H4,
- R12: 10, 50, 100 isolés + 10 petits groupes: Ci = H4.

Des tests effectués sur des champs identificateurs V_{N} de plus grande longueur ont montré que le codeur LI devient très compétitif.

Cet exemple de simulation montre également qu'un codeur unique ne permet pas de répondre à tous les cas de figure ce qui prouve l'intérêt de la solution mise en oeuvre par le procédé selon l'invention pour garantir de transmettre la séquence de champs identificateurs la plus courte possible.

Selon une caractéristique avantageuse du deuxième mode de réalisation de l'invention, le procédé comprend une étape de comparaison de la longueur de la séquence Ci(S) codée par le codeur Ci choisi avec la longueur de la séquence d'entrée S, à savoir 2^{N}. Si la longueur de la séquence codée est effectivement inférieure à la longueur de la séquence d'entrée, alors l'étape de transmission 30 est mise en oeuvre sur la base de la séquence codée Ci(S). Si, au contraire, la longueur de la séquence codée est supérieure à la longueur de la séquence d'entrée, alors l'étape de transmission 30 est mise en oeuvre sur la base d'un codeur de référence C_{R} avec lequel on est assuré d'obtenir une séquence codée C_{R}(S) de taille inférieure à 2^{N}. Un avantage est que, de cette manière, on garantit une taille maximale de la séquence codée transmise dans le paquet de commande Pkt1, Pkt2, Pkt3. On prendra, par exemple comme codeur de référence le codeur binaire BI défini ci-dessus.

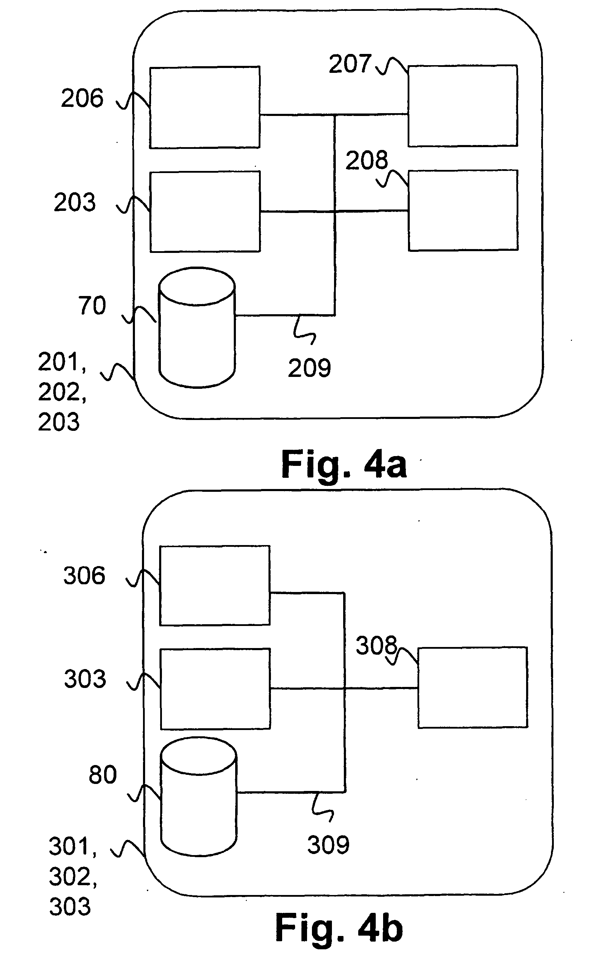

On présente ensuite, en relation avec la Fig. 4a, une entité client selon l'invention parmi les entités client 200 à 202 précédemment citées. On indique qu'une telle entité peut avantageusement être un routeur, un commutateur Ethernet IEEE 802.1Q/Dlad/ah ou un commutateur de label de type MPLS ou GMPLS.

L'entité client 201, 202, 203 comprend un bus de communication 209 auquel sont reliés une unité centrale 208, une mémoire non volatile 70, une mémoire vive 203, une interface plan de transport 206 et une interface plan de gestion 207. La mémoire non volatile 70 est adaptée pour mémoriser les programmes mettant en oeuvre l'invention, tel que les moyens pour choisir un codeur parmi une pluralité de codeurs, les moyens pour coder la séquence de N champs identificateurs à l'aide du codeur choisi et les moyens d'écriture de la séquence codée et de paramètres de codage dans un paquet. Elle comprend en particulier les modules logiciels L1 à LM correspondant à la pluralité de codeurs C1 à CM. La mémoire non volatile 70 est par exemple un disque dur, une mémoire flash ou une PROM, acronyme anglais de "Programmable Read-Only Memory". De manière plus générale, les programmes selon la présente invention sont stockés dans des moyens de stockage. Ces moyens de stockage sont lisibles par un ordinateur ou l'unité centrale 208. Ces moyens de stockage sont intégrés ou non à l'entité client 200 à 202 et peuvent être amovibles. Lors de la mise sous tension de l'entité client 200 à 202, les programmes sont transférés dans la mémoire vive 203 qui contient alors le code exécutable de l'invention ainsi que les données nécessaires à la mise en oeuvre de l'invention.

Il faut noter cependant que de tels programmes peuvent également être implantés dans des composants matériels tels que des ASICs, acronyme anglais de "Application Specific Integrated Circuits" ou des composants de logique programmable tels que des FPGA , acronyme anglais de "Field Programmable Gate Array".

L'interface plan de transport 206 permet les échanges de données entre l'entité client et l'entité serveur afin d'établir les connexions physiques sur le réseau de transport 500. Cette interface 206 est apte à transférer ou recevoir des informations sous la forme de trames Ethernet ou de connexions SDH.

L'interface plan de gestion 207 permet les échanges de données avec l'entité de gestion ou NMS 101, 102 du plan de gestion 100. Cette interface 207 est apte à transférer ou recevoir des informations sous la forme de paquets de données, via le réseau de gestion 400, au travers, par exemple, du protocole SNMP, acronyme anglais de "Simple Network Management Protocol".

On présente enfin, en relation avec la Fig. 4b, une entité serveur parmi les entités serveur 300 à 302 précédemment citées. On indique qu'une telle entité serveur peut être un routeur, un commutateur, un brasseur optique, un DSLAM ou encore un équipement de transmission ADM, acronyme anglais de "Add Drop Multiplexer". L'entité serveur 300 comprend un bus de communication 309 auquel sont reliés une unité centrale 308, une mémoire non volatile 80, une mémoire vive 303, une interface plan de commande 306 et une interface plan de transport 307. La mémoire non volatile 80 est adaptée pour mémoriser les programmes mettant en oeuvre l'invention, tel que les moyens pour identifier des paramètres de codage dans le paquet reçu et les moyens pour décoder la séquence de champs identificateurs reçue à l'aide d'un décodeur correspondant au codeur identifié. Elle comprend en particulier les modules logiciels L'1 à L'M correspondant à la pluralité de décodeurs D1 à DM. La mémoire non volatile 80 est par exemple un disque dur, une mémoire flash ou une PROM, acronyme anglais de "Programmable Read-Only Memory".

De manière plus générale, les programmes selon la présente invention sont stockés dans des moyens de stockage. Ces moyens de stockage sont lisibles par un ordinateur ou l'unité centrale 308. Ces moyens de stockage sont intégrés ou non à l'entité serveur 300à 302 et peuvent être amovibles. Lors de la mise sous tension de l'entité serveur 300 à 302, les programmes sont transférés dans la mémoire vive 303 qui contient alors le code exécutable de l'invention ainsi que les données nécessaires à la mise en oeuvre de l'invention.

Il faut noter cependant que de tels programmes peuvent être également implantés dans des composants matériels tels que des ASICs, acronyme anglais de "Application Specific Integrated Circuits" ou des composants de logique programmable tels que des FPGA , acronyme anglais de "Field Programmable Gate Array".

L'interface plan de commande 306 permet les échanges de données entre l'entité serveur 301, 302, 303 du plan de transport et l'entité client du plan de commande 201, 202, 203 afin d'établir les connexions physiques sur le réseau de transport 500. Cette interface 306 est apte à transférer ou recevoir des informations sous la forme de trames Ethernet ou de connexions SDH.

L'interface plan de transport 307 permet les échanges de données vers le réseau de télécommunication 500. Cette interface 307 est apte à transférer ou recevoir des informations sous la forme de trames Ethernet.

## Revendications

1. Procédé de transmission d'une pluralité de champs identificateurs de réseaux virtuels d'une entité client (201, 202, 203) vers une entité serveur (301, 302, 303), ladite entité client étant connectée à un plan de commande (200) d'un réseau de transport par commutation de paquets (500), ladite entité serveur étant connectée à un plan de transport dudit réseau de transport, ledit procédé étant **caractérisé en ce qu'**il comprend, sur réception de requêtes de connexion (RQ1,RQ2,RQ3) une pluralité de nouveaux services en provenance d'une entité de gestion (101, 102) du réseau de transport par l'entité client :
- une étape d'établissement d'une séquence comprenant une pluralité de champs identificateurs de réseaux virtuels en vue d'établir les connexions exigées par la mise en place de la pluralité de nouveaux services;
- une étape (10) de choix d'un codeur (Ci) parmi une pluralité de codeurs (C1, ...,CM) pour coder la séquence (S) en une séquence codée, selon un critère de longueur de ladite séquence codée,
- une étape de codage de la séquence (S) à l'aide du codeur (Ci) choisi destinée à fournir ladite séquence codée (Ci(S)) représentative de la séquence (S), et
- une étape de transmission d'un message comprenant la séquence codée et des paramètres de codage associés (PCi), lesdits paramètres de codage comprenant au moins un identificateur du codeur (ID-Ci), sous la forme d'un paquet de commande (Pkt1, Pkt2, Pkt3) sur une interface (ITF1, ITF2, ITF3) entre le plan de commande (200) et un plan de transport (300) dudit réseau en vue de sa transmission vers ladite entité serveur.

2. Procédé de transmission selon la revendication 1, dans lequel ladite étape (10) de choix du codeur comprend :
- une pluralité d'étapes (11₁,..., 11_{M}) de mise en oeuvre de la pluralité de codeurs (C₁,...,C_{M}), destinées à fournir une pluralité de séquences codées (C₁(S), ...,C_{M}(S)),
- une étape (12) de choix de la séquence codée C₁(S) la plus courte parmi la pluralité de séquences codées (C₁(S), ... ,C_{M}(S)).

3. Procédé de transmission selon la revendication 1, dans lequel ladite étape (10) de choix du codeur comprend les étapes:
- (13) d'extraction d'une pluralité de caractéristiques (V) de la séquence de champs identificateurs (S); et
- (14) d'application de règles préétablies (R1,...,RL) à ces caractéristiques (V), aboutissant au choix du codeur (Ci).

4. Procédé de transmission selon la revendication 3, dans lequel la pluralité de caractéristiques (V) comprend un nombre (V(1)) de champs identificateurs de réseaux virtuels dans la séquence (S).

5. Procédé de transmission selon la revendication 3, dans lequel un champ identificateur de réseaux virtuels comprenant un numéro, ledit procédé est **caractérisé en ce que** la pluralité de caractéristiques (V) comprend un premier nombre (V(2)) de groupes de champs identificateurs de réseaux virtuels dans la séquence, un groupe de champs identificateurs de réseaux virtuels étant constitué d'au moins un deuxième nombre k de champs identificateurs de réseaux virtuels présentant des numéros consécutifs, k étant un entier supérieur ou égal à deux.

6. Procédé de transmission selon la revendication 3, **caractérisé en ce que** la pluralité de caractéristiques comprend un nombre (V(3)) de champs identificateurs de réseaux virtuels isolés dans la séquence (S).

7. Procédé de transmission selon la revendication 3, **caractérisé en ce que** lesdites règles préétablies (R1,...,RL) sont établies à partir d'un ensemble d'apprentissage comprenant une pluralité de séquences.

8. Entité client (201, 202, 203) connectée à un plan de commande (200) d'un réseau de transport par commutation de paquets (500), **caractérisée en ce qu'**elle comprend, sur réception d'une requête de connexion (RQ1,RQ2,RQ3) à une pluralité de nouveaux services en provenance d'une entité de gestion (101,102) du réseau de transport :
- des moyens d'établissement d'une séquence (S) comprenant une pluralité de champs identificateurs de réseaux virtuels en vue d'établir les connexions exigées par la mise en place de la pluralité de nouveaux services;
- des moyens de choix d'un codeur (Ci) parmi une pluralité de codeurs (C1, ...,CM) pour coder la séquence (S) en une séquence codée, selon un critère de longueur de ladite séquence codée,
- des moyens de codage de la séquence (S) à l'aide du codeur (Ci) choisi destinés à fournir ladite séquence codée (Ci(S)), représentative de ladite séquence (S),
- des moyens de transmissions d'un message comprenant la séquence codée et des paramètres de codage associés (PCi), lesdits paramètres de codage comprenant au moins un identificateur du codeur (ID-Ci), sous la forme d'un paquet de commande (Pkt1, Pkt2, Pkt3) sur une interface (ITF1, ITF2, ITF3) entre le plan de commande (200) et un plan de transport (300) dudit réseau en vue de sa transmission vers ladite entité serveur.

9. Entité serveur (301, 302, 303) connectée à un réseau de transport (500) **caractérisée en ce qu'**elle comprend :
- des moyens de réception d'un paquet de commande (Pktr1, Pktr2, Pktr3) transmis par une entité client selon la revendication 8, le dit paquet comprenant une séquence codée représentative d'une pluralité de champs identificateurs de réseaux virtuels,
- des moyens pour décoder la séquence codée reçue à l'aide d'un décodeur (Di) correspondant au codeur identifié sur la base des paramètres de codage identifiés.

10. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé de transmission selon la revendication 1, lorsqu'il est exécuté sur un ordinateur.

## Claims

1. Method for transmitting a plurality of virtual network identifier fields from a client entity (201, 202, 203) to a server entity (301, 302, 303) said client entity being connected to a control plane (200) of a packet switching transport network (500), said server entity being connected to a transport plane of said transport network, said method being **characterized in that** it comprises, on receipt of requests for connection (RQ1, RQ2, RQ3) to a plurality of new services originating from a management entity (101, 102) of the transport network by the client entity:
- a step of establishing a sequence comprising a plurality of identifier fields for virtual networks with a view to establishing the connections demanded by the installing of the plurality of new services;
- a step (10) of choosing a coder (Ci) from among a plurality of coders (C1, ..., CM) for coding the sequence (S) as a coded sequence, according to a length criterion for said coded sequence,
- a step of coding the sequence (S) with the aid of the chosen coder (Ci) intended to provide said coded sequence (Ci(S)), representative of said sequence (S), and
- a step of transmitting a message containing the coded sequence and associated coding parameters (PCi), said coding parameters comprising at least one identifier of the coder (ID-Ci),in the form of a control packet (Pkt1, Pkt2, Pkt3) on an interface (ITF1, ITF2, ITF3) between the control plane (200) and a transport plane (300) of said network with a view to its transmission to said server entity.

2. Transmission method according to Claim 1, in which said step (10) of choosing the coder comprises:
- a plurality of steps (11₁, ..., 11_{M}) of implementing the plurality of coders (C₁, ..., C_{M}), intended to provide a plurality of coded sequences (C₁(S), ..., C_{M}(S)),
- a step (12) of choosing the shortest coded sequence Cᵢ(S) from among the plurality of coded sequences (C₁(S), ..., C_{M}(S)).

3. Transmission method according to Claim 1, in which said step (10) of choosing the coder comprises the steps:
- (13) of extracting a plurality of characteristics (V) of the sequence of identifier fields (S); and
- (14) of applying pre-established rules (R1, ..., RL) to these characteristics (V), culminating in the choice of the coder (Ci).

4. Transmission method according to Claim 3, in which the plurality of characteristics (V) comprises a number (V(1)) of virtual network identifier fields in the sequence (S).

5. Transmission method according to Claim 3, in which a virtual network identifier field comprising a serial number, said method is **characterized in that** the plurality of characteristics (V) comprises a first number (V(2)) of groups of virtual network identifier fields in the sequence, a group of virtual network identifier fields being made up of at least one second number k of virtual network identifier fields exhibiting consecutive serial numbers, k being an integer greater than or equal to two.

6. Transmission method according to Claim 3, **characterized in that** the plurality of characteristics comprises a number (V(3)) of isolated virtual network identifier fields in the sequence (S).

7. Transmission method according to Claim 3, **characterized in that** said pre-established rules (R1, ..., RL) are established on the basis of a training set comprising a plurality of sequences.

8. Client entity (201, 202, 203) connected to a control plane (200) of a packet switching transport network (500), **characterized in that** it comprises, on receipt of a request for connection (RQ1, RQ2, RQ3) to a plurality of new services originating from a management entity (101, 102) of the transport network:
- means for establishing a sequence (S) comprising a plurality of identifier fields for virtual networks with a view to establishing the connections demanded by the installing of the plurality of new services;
- means for choosing a coder (Ci) from among a plurality of coders (C1, ..., Cm) for coding the sequence (S) as a coded sequence, according to a length criterion for said coded sequence,
- means for coding sequence (S) with the aid of the chosen coder (Ci) intended to provide said coded sequence (Ci(S)), representative of said sequence (S),
- means of transmitting a message comprising the coded sequence and associated coding parameters (PCi), said coding parameters comprising at least one identifier of the coder (ID-Ci), in the form of a control packet (Pkt1, Pkt2, Pkt3) on an interface (ITF1, ITF2, ITF3) between the control plane (200) and a transport plane (300) of said network with a view to its transmission to said server entity.

9. Server entity (301, 302, 303) connected to a transport network (500) **characterized in that** it comprises:
- means for receiving a control packet (Pktr1, Pktr2, Pktr3) transmitted by a client entity according to Claim 8, said packet comprising a coded sequence representative of a plurality of virtual network identifier fields,
- means for decoding the coded sequence received with the aid of a decoder (Di) corresponding to the coder identified on the basis of the identified coding parameters.

10. Computer program product downloadable from a communication network and/or stored on a medium readable by a computer and/or executable by a microprocessor, **characterized in that** it comprises program code instructions for executing the transmission method according to Claim 1, when it is executed on a computer.

## Patentansprüche

1. Verfahren zur Übertragung einer Vielzahl von Kennungsfeldern virtueller Netze von einer Client-Einheit (201, 202, 203) an eine Server-Einheit (301, 302, 303), wobei die Client-Einheit mit einer Steuerebene (200) eines Paketvermittlung-Transportnetzes (500) verbunden ist, wobei die Server-Einheit mit einer Transportebene des Transportnetzes verbunden ist, wobei das Verfahren **dadurch gekennzeichnet ist, dass** es beim Empfang von Anforderungen (RQ1, RQ2, RQ3) zur Verbindung mit einer Vielzahl von neuen Diensten, die von einer Verwaltungseinheit (101, 102) des Transportnetzes kommen, durch die Client-Einheit enthält:
- einen Schritt des Aufbaus einer Folge, die eine Vielzahl von Kennungsfeldern virtueller Netze enthält, um die durch das Einsetzen der Vielzahl von neuen Diensten erforderlichen Verbindungen aufzubauen;
- einen Schritt (10) der Auswahl eines Codierers (Ci) aus einer Vielzahl von Codierern (C1, ..., CM), um die Folge (S) in eine codierte Folge zu codieren, gemäß einem Längenkriterium der codierten Folge,
- einen Schritt des Codierens der Folge (S) mit Hilfe des gewählten Codierers (Ci), der dazu bestimmt ist, die für die Folge (S) repräsentative codierte Folge (Ci(S)) zu liefern, und
- einen Schritt der Übertragung einer Mitteilung, die die codierte Folge und zugeordnete Codierparameter (PCi) enthält, wobei die Codierparameter mindestens eine Kennung des Codierers (ID-Ci) in Form eines Steuerpakets (Pkt1, Pkt2, Pkt3) an einer Schnittstelle (ITF1, ITF2, ITF3) zwischen der Steuerebene (200) und einer Transportebene (300) des Netzes enthalten, für ihre Übertragung an die Server-Einheit.

2. Übertragungsverfahren nach Anspruch 1, bei dem der Schritt (10) der Auswahl des Codierers enthält:
- einer Vielzahl von Schritten (11₁, ..., 11_{M}) der Anwendung der Vielzahl von Codierern (C₁, ..., C_{M}), die dazu bestimmt sind, eine Vielzahl codierter Folgen (C₁(S), ..., C_{M}(S)) zu liefern,
- einen Schritt (12) der Auswahl der kürzesten codierten Folge Cᵢ(S) aus der Vielzahl von codierten Folgen (C₁(S), ..., C_{M}(S)).

3. Übertragungsverfahren nach Anspruch 1, bei dem der Schritt (10) der Auswahl des Codierers die Schritte enthält:
- (13) der Entnahme einer Vielzahl von Merkmalen (V) aus der Folge von Kennungsfeldern (S); und
- (14) der Anwendung vorab erstellter Regeln (R1, ..., RL) an diese Merkmale (V), was zur Auswahl des Codierers (Ci) führt.

4. Übertragungsverfahren nach Anspruch 3, bei dem die Vielzahl von Merkmalen (V) eine Anzahl (V(1)) von Kennungsfeldern virtueller Netze in der Folge (S) enthält.

5. Übertragungsverfahren nach Anspruch 3, bei dem, wenn ein Kennungsfeld virtueller Netze eine Nummer enthält, das Verfahren **dadurch gekennzeichnet ist, dass** die Vielzahl von Merkmalen (V) eine erste Anzahl (V(2)) von Gruppen von Kennungsfeldern virtueller Netze in der Folge enthält, wobei eine Gruppe von Kennungsfeldern virtueller Netze aus mindestens einer zweiten Anzahl k von Kennungsfeldern virtueller Netze besteht, die aufeinanderfolgende Nummern haben, wobei k eine ganze Zahl größer als oder gleich zwei ist.

6. Übertragungsverfahren nach Anspruch 3, **dadurch gekennzeichnet, dass** die Vielzahl von Merkmalen eine Anzahl (V(3)) von Kennungsfeldern virtueller Netze enthält, die in der Folge (S) isoliert sind.

7. Übertragungsverfahren nach Anspruch 3, **dadurch gekennzeichnet, dass** die vorab erstellten Regeln (R1, ..., RL) ausgehend von einer Lerneinheit erstellt werden, die eine Vielzahl von Folgen enthält.

8. Client-Einheit (201, 202, 203), die mit einer Steuerebene (200) eines Paketübermittlung-Transportnetzes (500) verbunden ist, **dadurch gekennzeichnet, dass** sie bei Empfang einer Anforderung (RQ1, RQ2, RQ3) zur Verbindung mit einer Vielzahl von neuen Diensten, die von einer Verwaltungseinheit (101, 102) des Transportnetzes kommt, enthält:
- Einrichtungen für den Aufbau einer Folge (S), die eine Vielzahl von Kennungsfeldern virtueller Netze enthält, um die durch das Einsetzen der Vielzahl von neuen Diensten erforderlichen Verbindungen aufzubauen;
- Einrichtungen zur Auswahl eines Codierers (Ci) aus einer Vielzahl von Codierern (C1, ..., CM), um die Folge (S) in eine codierte Folge zu codieren, gemäß einem Längenkriterium der codierten Folge,
- Einrichtungen zum Codieren der Folge (S) mit Hilfe des ausgewählten Codierers (Ci), die dazu bestimmt sind, die für die Folge (S) repräsentative codierte Folge (Ci(S)) zu liefern,
- Einrichtungen zur Übertragung einer Mitteilung, die die codierte Folge und zugeordnete Codierparameter (PCi) enthält, wobei die Codierparameter mindestens eine Kennung des Codierers (ID-Ci) in Form eines Steuerpakets (Pkt1, Pkt2, Pkt3) an einer Schnittstelle (ITF1, ITF2, ITF3) zwischen der Steuerebene (200) und einer Transportebene (300) des Netzes enthalten, für ihre Übertragung an die Server-Einheit.

9. Server-Einheit (301, 302, 303), die mit einem Transportnetz (500) verbunden ist, **dadurch gekennzeichnet, dass** sie enthält:
- Empfangseinrichtungen eines Steuerpakets (Pktr1, Pktr2, Pktr3), das von einer Client-Einheit nach Anspruch 8 übertragen wird, wobei das Paket eine codierte Folge enthält, die für eine Vielzahl von Kennungsfelder virtueller Netze repräsentativ ist,
- Einrichtungen, um die empfangene codierte Folge mit Hilfe eines Decodierers (Di) zu decodieren, der dem auf der Basis der identifizierten Codierparameter identifizierten Codierer entspricht.

10. Computerprogrammprodukt, das von einem Kommunikationsnetz heruntergeladen und/oder auf einem computerlesbaren Träger gespeichert und/oder von einem Mikroprozessor ausgeführt werden kann, **dadurch gekennzeichnet, dass** es Programmcodeanweisungen zur Ausführung des Übertragungsverfahrens nach Anspruch 1 enthält, wenn es auf einem Computer ausgeführt wird.
